Europäisches Patentamt

European Patent Office

Office européen des brevets

(11) Publication number: **0 085 394**
**B1**

(19)

(12) **EUROPEAN PATENT SPECIFICATION**

(45) Date of publication of patent specification: **11.09.85**

(51) Int. Cl.⁴: **B 60 L 3/10, H 02 P 5/40**

(21) Application number: **83100719.0**

(22) Date of filing: **26.01.83**

(54) Control system for electric cars driven by induction motors.

(30) Priority: **29.01.82 JP 11551/82**

(43) Date of publication of application:
**10.08.83 Bulletin 83/32**

(45) Publication of the grant of the patent:
**11.09.85 Bulletin 85/37**

(84) Designated Contracting States:
**DE FR GB SE**

(56) References cited:
**EP-A-0 022 267**
**FR-A-2 451 126**
**JP-A-55 017 230**

(73) Proprietor: **Hitachi, Ltd.**
**5-1, Marunouchi 1-chome**
**Chiyoda-ku Tokyo 100 (JP)**

(72) Inventor: **Ibamoto, Masahiko**
**434-2, Takeda**
**Katsuta-shi Ibaraki-ken (JP)**
Inventor: **Narita, Hiroshi**
**885-21, Haratsubo Ichige**
**Katsuta-shi Ibaraki-ken (JP)**
Inventor: **Suzuki, Katsuaki**
**1838, Fujigaoka Sekimoto-cho**
**Kitaibaraki-shi Ibaraki-ken (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Courier Press, Leamington Spa, England.

**Description**

BACKGROUND OF THE INVENTION
Field of the Invention

The present invention relates to the frequency control of a car which is driven by induction motors, and more particularly to a control system for an induction motor driven car having a large number of drive axles.

Description of the Prior Art

An electric car using induction motors as its traction motors has a prospect of remarkably high enhancement of its adhesion characteristics and such motors are applied especially to electric cars. A control system for the induction motors is preferred for the electric car in view of a comfortable ride if it performs a constant torque control. For this preference, therefore, it is general to control a motor current to a constant level while holding a slip frequency at a constant value. In order to hold the slip frequency constant, there is used a system in which the rotational frequency is detected by means of a rotational speed detector (which is frequently exemplified by a pulse generator) coupled to one of the induction motors or wheels so that the frequency obtained by adding a constant slip frequency to that rotational frequency (or by subtracting the former from the latter when in a regeneratively braked run) may be used as the operational frequency of a power transducer (e.g., an inverter). Even in case the slip frequency is controlled in a variable manner, it is necessary to detect the rotational speed of that induction motor so that the frequency may be controlled on the basis of the output of the induction motor.

Now, in the case of an electric car, motors are coupled to several axles so that the drive power may be dispersed. However, the respective wheels do not always have an equal diameter but may possibly have a diameter of 860 mm, if they are new, or a diameter of 780 mm if they are worn out. Generally speaking, therefore, the electric motors have irregular rotational speeds.

In this case, a variety of systems have been proposed depending upon which rotational speed detector is used to provide the basis of the control.

More specifically, various systems have been proposed including one in which the outputs of all the rotational speed detectors are fed through a low preference circuit so that the minimum speed may always be referred to, another in which the outputs of all the rotational speed detectors are fed through a high preference circuit, on the contrary, so that the maximum speed may be referred to, still another in which the average value of the outputs of all the rotational speed detectors is referred to, and so on. All of the systems thus proposed have their intrinsic advantages and disadvantages.

SUMMARY OF THE INVENTION

It is, therefore, an object of the present invention to improve the traction performance of an electric car which is driven by induction motors.

According to the present invention as specified in the independent Claims 1 and 4, of the rotational speed detecting means respectively provided for a plurality of induction motors, a first one generating the maximum speed signal and/or a second one generating the minimum speed signal are selected during the coasting run of an electric car which is driven by the induction motors. And, the rotational speed detecting means thus selected are or is memorized. During the power run of the electric car, the output frequency of a power transducer for supplying the induction motors with an electric power is controlled with reference to the output of the first rotational speed detecting means. During the regeneratively braked run of the electric car, on the other hand, the output frequency of the aforementioned power transducer is controlled with reference to the output of the second rotational speed detecting means.

The induction motor corresponding to the aforementioned first rotational speed detecting means generates the minimum torque during the power run so that the corresponding wheels do not easily slip. As far as all wheels do not slip, therefore, the output of the first rotational speed detecting means is proportional to the running speed of the electric car so that the output frequency of the power transducer is not increased even when the wheels partially slip. As a result, the constant-speed running characteristics of the induction motors can be effectively utilized so that the adhesion characteristics can be improved.

During the regeneratively braked run of the electric car, the motor corresponding to the second rotational speed detecting means generates the minimum braking torque so that the corresponding wheels do not easily skid. As far as all wheels do not skid, therefore, the output of the second rotational speed detecting means is proportional to the running speed of the electric car so that the output frequency does not drop even if the wheels partially skid. As a result, the constant-speed running characteristics of the induction motors can be effectively utilized so that the adhesion characteristics can be improved.

BRIEF DESCRIPTION OF THE DRAWINGS

Fig. 1 is a block diagram showing a control system for an electric car, which is driven by induction motors, in accordance with one preferred embodiment of the present invention;

Figs. 2 to 4 are diagrams illustrating the frequency-torque characteristics of the induction motors for explaining the operation of the present invention;

Fig. 5 is also a block diagram showing another embodiment of the present invention, in which only the frequency control system of Fig. 1 is modified;

Fig. 6 is also a block diagram showing still another embodiment of the present invention, in which only the frequency control system of Fig. 1 is modified; and

Fig. 7 is a flow chart explaining the microcomputer which is shown in the embodiment of Fig. 6.

## DESCRIPTION OF THE PREFERRED EMBODIMENTS

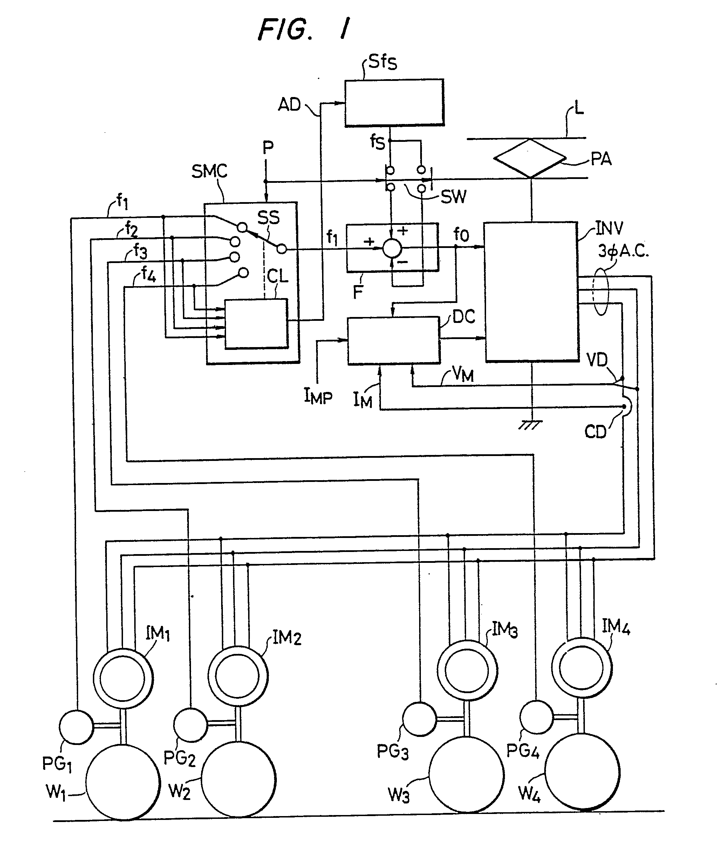

As shown in Fig. 1, the electric power collected from an overhead contact line L through a pantograph PA is introduced into a power transducer INV. This power transducer INV is made operative to generate a three-phase alternating current of variable voltage and frequency and is desirably constructed of an inverter, if the line L is supplied with a direct current, and a combination of a converter and an inverter if the line L is supplied with an alternating current. The following description is directed to the case of the inverter. The output $3\phi$ A.C. of the inverter INV is fed to four induction motors $IM_1$ to $IM_4$. To these respective motors $IM_1$ to $IM_4$, there are respectively connected wheels $W_1$ to $W_4$ by which an electric car is driven.

The inverter INV has its output voltage $V_M$ controlled in the following manner. In a first example, a motor current $I_M$ is detected by means of a current detector CD, and the output voltage $V_M$ of the inverter INV is so controlled that the output of the current detector CD may follow a current instruction $I_{MP}$. As a result, the ratio of the output frequency $f_0$ to the output voltage $V_M$ of the inverter INV takes a constant value. In a second example, the output voltage (i.e., the motor voltage) of the inverter INV is detected by means of a voltage detector VD, the output of which is so controlled as to become proportional to the frequency instruction $f_0$. As a result, the motor current $I_M$ takes a substantially constant value.

Therefore, it is arbitrary which control system is to be adopted or whether they are to be mixed or combined, and which construction of a voltage controller DC is determined.

Now, a frequency control system constituting an essential portion of the present invention will be described in the following.

The rotational speeds of the respective induction motors $IM_1$ to $IM_4$ are detected by means of speed detectors such as pulse generators $PG_1$ to $PG_4$. These generators $PG_1$ to $PG_4$ have their outputs expressed in terms of frequency signals $f_1$ to $f_4$. These frequency signals $f_1$ to $f_4$ are introduced into a selective memory circuit SMC. In the shown state which is schematically expressed by means of a selecting switch SS, the one frequency signal $f_1$ is selected. On the other hand, a slip frequency setting unit $Sf_s$ generates a slip frequency signal $f_s$, and this slip frequency $f_s$ and the aforementioned frequency signal $f_1$ are introduced into a frequency calculating circuit F, by which the inverter output frequency signal $f_0$ is calculated. If the electric car is in its power running state, a switch SW is held in the shown state by the action of a power run signal P so that the frequency calculating circuit F executes the calculation of $f_0=f_1+f_s$. If the electric car is in its regeneratively braked state, on the contrary, the aforementioned power run signal P disappears. As a result, the switch SW is shifted to the left so that the calculating circuit F executes the calculation of $f_0=f_1-f_s$.

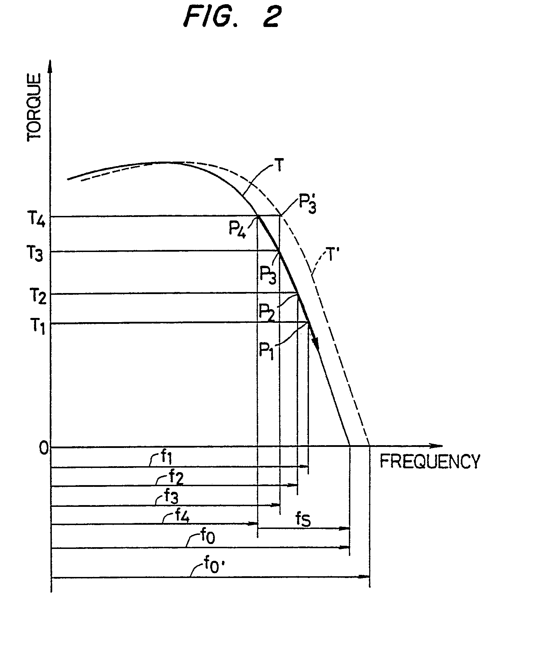

Assuming now that the selective memory circuit SMC be a low preference circuit during the power run of the electric car, as in the prior art, the operation will be described with reference to Fig. 2.

During the power run, the output frequencies $f_1$ to $f_4$ of the pulse generators $PG_1$ to $PG_4$ respectively coupled to the induction motors $IM_1$ to $IM_4$ are fed to a low-frequency preference circuit. If the output frequency $f_4$, for example, of those frequencies $f_1$ to $f_4$ is the lowest, the low-frequency preference circuit selects the output frequency $f_4$, to which the slip frequency $f_s$ is added by the action of the frequency calculating circuit F so that the inverter INV operates at the frequency of $f_0=f_4+f_s$. The output voltage $V_M$ of the inverter INV is so controlled, as has been described, that the motor current $I_M$ or $V_M/f_0$ may become constant.

As a result, the torques respectively generated by the induction motors are dispersed as indicated at $T_1$ to $T_4$ in the frequency-torque characteristics of Fig. 2.

It is now assumed that the wheels slip during the power run. Then, the induction motor $IM_4$ generating the highest torque is liable to slip so that the operating point is shifted from $P_4$ along the arrow shown by a thick solid line. As a result, the output frequency of the low-frequency preference circuit is shifted to $f_3$. Thus, the frequency calculating circuit F executes the calculation of $f_0'=f_3+f_s$ so that the operating frequency of the inverter is slightly increased from $f_0$ to $f_0'$. However, this increase is not so large as that of the speed of the slipping wheels. This reduces the probability that the increase of the speed of the slipping wheels is positively fed back to invite highly idle revolutions.

On the other hand, in case the slip take place in a system using a high-frequency preference circuit, the reference frequency may be shifted to the pulse generators of the wheels which slip. This leads to large slipping.

If the low-frequency preference circuit is used, as has been described hereinbefore, it is expected that the adhesion characteristic is enhanced to an excellent level. However, the frequency-torque characteristics of all the induction motors after the slipping are illustrated by the broken line T, of Fig. 2. If the induction motor $IM_3$ is taken up as an example, therefore, the operating point is shifted from $P_3$ to $P_3'$, and the generated torque is increased from $T_3$ to $T_4$. At this time, the wheel $W_3$ is that which is the most liable to slip. If the wheel $W_3$ slips too, the speed reference is shifted to the wheel $W_2$ while leaving a high possibility that large slipping is reached like in a chain reaction.

Thus, even if slip takes place, the speed reference is instantly shifted to the remaining wheels which do not slip so that the frequency is not increased to a high level. However, because the speed of the wheels generating the maximum torque so that they are the most liable to slip is referred to, the speed reference axle is so variable as to make the frequency control unstable.

On the contrary, the selective memory circuit SMC used in one embodiment of the present invention is constructed in the following manner. A calculating unit CL receives the frequency signals $f_1$ to $f_4$ during the coasting run of the electric car and selectively memorizes which one of the frequency signals indicates the maximum speed and which one of the frequency signals indicates the minimum speed. For example, if the signal $f_1$ indicates the maximum speed and the signal $f_4$ indicates the minimum speed, that is what is memorized. During the power run, moreover, the frequency signal $f_1$ at that time is used as the frequency reference. During the regeneratively braked run, on the contrary, the frequency signal $f_4$ at that time is used as the frequency reference. The selecting switch SS is changed over in a manner to ensure the selective use of the frequency signals $f_1$ and $f_4$. On the other hand, the calculating unit CL generates an adjusting signal AD, if necessary, from the relationship among the frequency signals $f_1$ to $f_4$ during the coasting run.

Now, during the coasting run of the electric car in which the wheels neither slip nor skid, it is assumed that inequalities of $f_1 > f_2 > f_3 > f_4$ hold among the output frequencies $f_1$ to $f_4$ of the respective pulse generators $PG_1$ to $PG_4$. The selective memory circuit SMC compares the output frequencies $f_1$ to $f_4$ of the respective pulse generators $PG_1$ to $PG_4$ during the coasting run and judges that the frequency $f_1$ is the highest and the frequency $f_4$ is the lowest. The selectively memory circuit SMC memorizes that the selecting switch SS should be switched to the pulse generator $PG_1$ during the power run and to the pulse generator $PG_4$ during the regeneratively braked run.

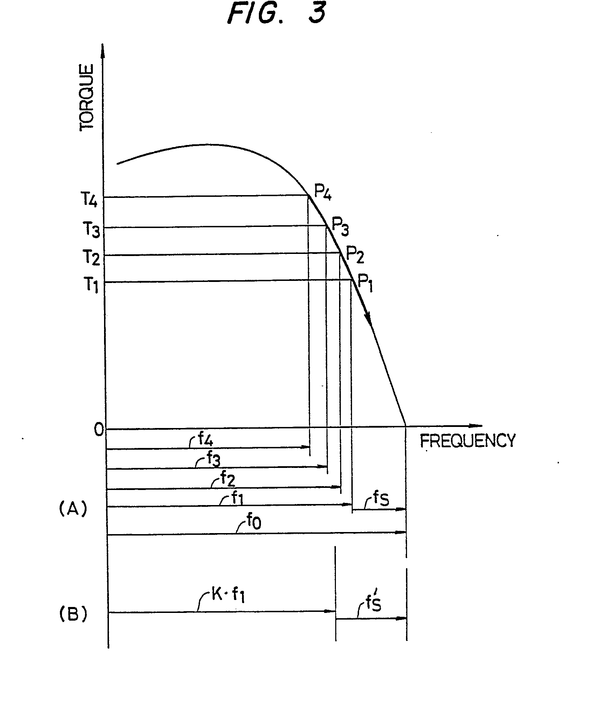

With the construction thus far described, the inverter INV is run (as referred to Fig. 3(A)) by using the frequency $(f_1 + f_s)$, which is obtained by adding the slip frequency $f_s$ to the highest reference frequency detected, as its operating frequency $f_0$, as illustrated in Fig. 3, so that the respective induction motors $IM_1$ to $IM_4$ generate the torques $T_1$ to $T_4$.

Here, if the wheel spin occurs the wheel $W_4$ generating the highest torque slips so that the induction motor $IM_4$ has its operating point shifted, as indicated at the heavy line arrow in Fig. 3. At this time, the frequency reference is not influenced in the least even if the wheel $W_4$ spins, because it still resorts to the wheel $W_1$, so that the operational frequency of $f_0 = f_1 + f_s$ of the inverter is not abruptly increased. As a result, the torque of the slipping wheel promptly decreases along the frequency-torque characteristic curve of Fig. 3 so that the adhesion is liable to be restored.

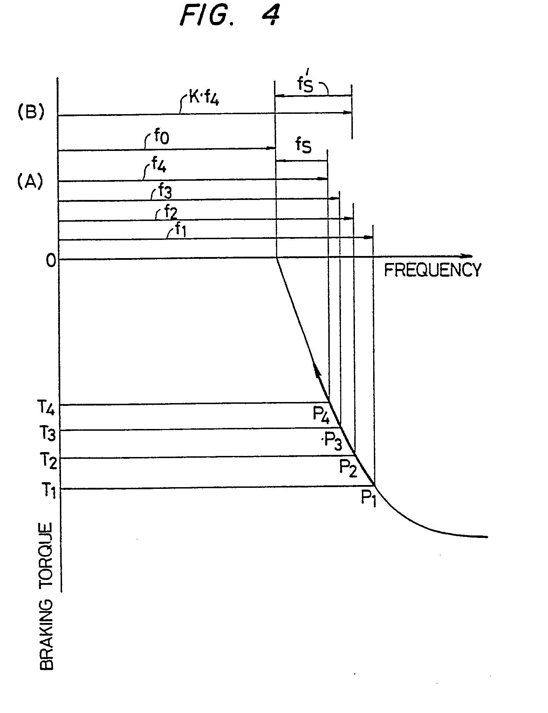

During the regeneratively braked run, on the other hand, the frequency $(f_4 - f_s)$, which is obtained by subtracting the slip frequency $f_s$ from

the lowest reference frequency $f_4$ detected in accordance with the frequency-torque characteristic curve illustrated in Fig. 4, is used as the operational frequency of the inverter INV (as referred to Fig. 4(A)) so that the respective induction motors generate the torques $T_1$ to $T_4$.

If skidding should occur, the wheel $W_1$ having the highest braking torque would skid so that only the induction motor $IM_1$ would have its operating point shifted as indicated by the arrow in the same Figure. However, since the frequency reference is still provided by the wheel $W_4$ during the regeneratively braked run, no influence is exerted even if the wheel $W_1$ skids, so that the operational frequency $f_0$ of the inverter will not abruptly drop. As a result, the braking torque of the skidding wheel is promptly dropped so that the adhesion is liable to be restored.

Here, since the wheel diameters are dispersed during both the power run and the regeneratively braked run, the torques respectively generated by the motors are dispersed among $T_1$ to $T_4$, as illustrated in Figs. 3 and 4. On the other hand, the slip frequency $f_s$ should be set by the necessary total torque $(T_1 + T_2 + T_3 + T_4)$ of the electric car. If the wheel diameters are dispersed, therefore, the slip frequency should be adjusted in a manner to take the disperse into consideration.

On the other hand, it is also possible to automatically make corrections from the relationship among the levels of the frequency signals $f_1$ to $f_4$ during the coasting run. More specifically, the adjusting signal AD shown in Fig. 1 corrects the slip frequency $f_s$ from the relationship of the frequency signal $f_1$ or $f_4$ selected from all the frequency signals $f_1$ to $f_4$, e.g., their average value.

By this correction, the power run or regeneratively braked run characteristics of the electric car can be maintained at the preset desirable ones.

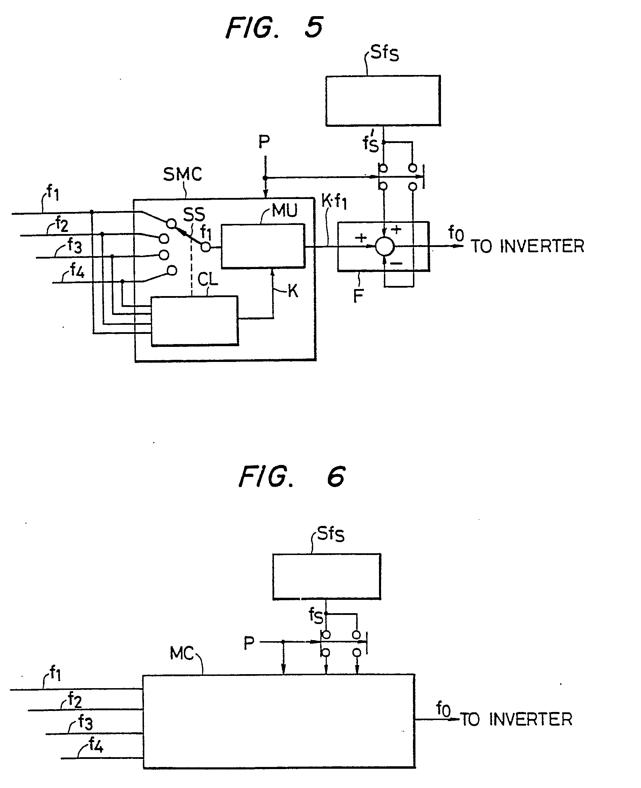

Fig. 5 shows the construction of only the frequency control system of another embodiment of the present invention, which is modified from that of Fig. 1.

This embodiment is characterized in that a multiplier MU is disposed in the selective memory circuit SMC without correcting a slip frequency $f'_s$ relative to the dispersion among the wheel diameters so that the frequency signal (e.g., $f_1$) selected may be multiplied by a constant K which is determined by the calculating circuit CL.

This results in the calculation of $f_0 = Kf_1 + f'_s$ or $f_0 = Kf_4 - f'_s$, as illustrated in (B) of Figs. 3 and 4. As a result, an effect like that of the foregoing embodiment can be enjoyed.

In the embodiments of Figs. 1 and 5, the selective memory circuit SMC is exemplified by the selecting switch SS, which can be replaced by stationary switching means such as a semiconductor.

Fig. 6 shows still another embodiment of the frequency control system according to the present invention, in which the selective memory circuit SMC and the frequency calculating circuit F are replaced by a microcomputer MC.

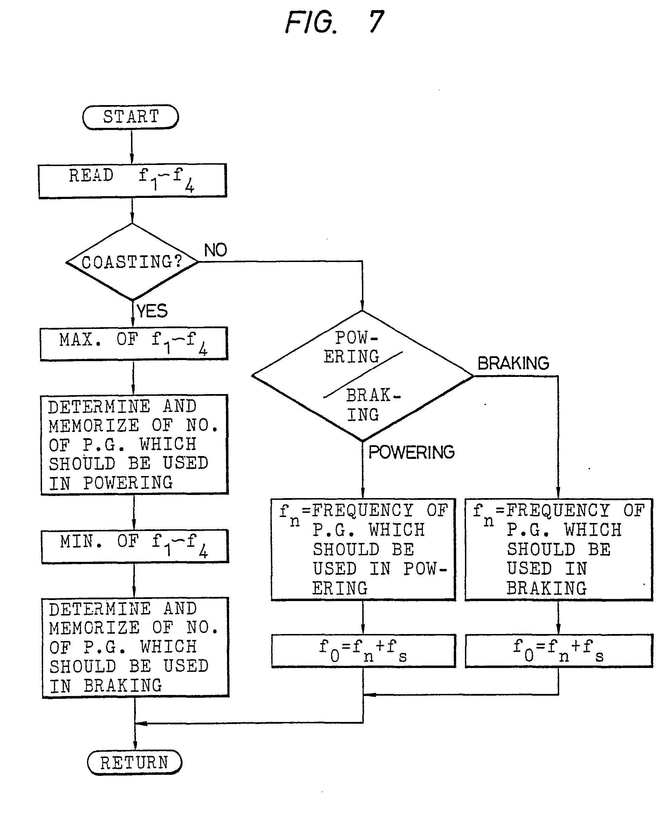

Fig. 7 is a chart showing the flow which is to be processed in accordance with the program of the microcomputer MC of Fig. 6.

In accordance with the position of the handle of a master controller or in response to the stop signal of the inverter, there is introduced a signal indicating that the car driven by the induction motors is in its coasting run. During this coasting run, the highest frequency is selected, upon which it is determined that the pulse generator generating that signal be the one to be selected during the power run. Moreover, the minimum frequency is selected, upon which it is determined that the pulse generator generating that signal is the one to be selected during the regeneratively braked run.

During the running operation, on the other hand, it is judged whether the run is of the power type or the regeneratively braked type. The output frequency of the pulse generator, which has been determined to be selected during the coasting run, is designated $f_n$, and the calculation of $f_0 = f_n + f_s$ is executed during the power run whereas the calculation of $f_0 = f_n - f_s$ is executed during the regeneratively braked run, thereby to determine the operational frequency of the inverter. By repeatedly executing a series of these processings at a predetermined high-speed period, it is possible to exhibit a function like that of the embodiment shown in fig. 1.

Thus, if the judgements of the conditions and the processings of the signals are conducted in accordance with the software of the microcomputer, the parts such as the selecting switch can be dispensed with so that the circuit construction can be simplifed with an increase in the reliability. This effect is prominent in case the control system is equipped with the microcomputer for another application.

As has been described hereinbefore, according to the present invention, even if slip occurs, the operational frequency of the inverter does not abruptly fluctuate so that the adhesion can be easily restored.

**Claims:**

1. A control system for an electric car, comprising a plurality of induction motors (IM1 ... IM4) corresponding to a plurality of wheels (W1 ... W4); means (PG1 ... PG4) for detecting the rotational speeds of said induction motors; a common power transducer (INV) for supplying said induction motors with electric power; and means (SMC, F; MC) for controlling the output frequency of said power transducer on the basis of the outputs of said rotational speed detecting means, wherein said control means includes means for selecting that one of said rotational speed detecting means (PG1 ... PG4) which generates the maximum speed during the coasting run of said electric car; means for memorizing which one of said rotational speed detecting means has been selected; and means (F) for controlling the output frequency of said power transducer (INV) during the power run of said electric car using as a reference the output of said rotational speed detecting means which has been memorized.

2. A control system according to claim 1, wherein said frequency control means has means (F) for determining the output frequency of said power transducer (INV) by adding the output of slip frequency setting means ($Sf_s$) to the output of said rotational speed detecting means (PG1 ... PG4) which has been memorized.

3. A control system according to claim 1, wherein said frequency control means has means MU) for correcting the output of said rotational speed detecting means (PG1 ... PG4) during the power run in dependence on rotational speed differences detected and memorized during the coasting run; and means (F) for determining the output frequency of said power transducer (INV) by adding the output of slip frequency setting means ($Sf_s$) to the output of said correcting means (MU).

4. A control system for an electric car, comprising a plurality of induction motors (IM1 ... IM4) corresponding to a plurality of wheels (W1 ... W4); means (PG1 ... PG4) for detecting the rotational speeds of said induction motors; a common power transducer (INV) for supplying said induction motors with electric power; and means (SMC, F; MC) for controlling the output frequency of said power transducer on the basis of the outputs of said rotational speed detecting means, wherein said control means includes means for selecting that one of said rotational speed detecting means (PG1 ... PG4) which generates the minimum speed during the coasting run of said electric car; means for memorizing which one of said rotational speed detecting means has been selected; and means (F) for controlling the output frequency of said power transducer (INV) during the regeneratively braked run of said electric car using as a reference the output of said rotational speed detecting means which has been memorized.

5. A control system according to claim 4, wherein said frequency control means has means (F) for determining the output frequency of said power transducer (INV) by subtracting the output of slip frequency setting means ($Sf_s$) from the output of said rotational speed detecting means (PG1 ... PG4) which has been memorized.

6. A control system according to claim 4, wherein said frequency control means has means (MU) for correcting the output of said rotational speed detecting means (PG1 ... PG4) during the braked run in dependence on rotational speed differences detected and memorized during the coasting run; and means (F) for determining the output frequency of said power transducer (INV) by subtracting the output of slip frequency setting means ($Sf_s$) from the output of said correcting means (MU).

**Patentansprüche**

1. Regelsystem für ein elektrisches Fahrzeug,

mit mehreren Rädern (W1 . . . W4) entsprechenden mehreren Induktionsmotoren (IM1 . . . IM4);
Einrichtungen (PG1 . . . PG4) zur Erfassung der
Drehzahlen der Induktionsmotoren; einem
gemeinsamen Leistungswandler (INV) zur Versorgung der Induktionsmotoren mit elektrischer
Leistung; und einer Einrichtung (SMC, F; MC) zur
Regelung der Ausgangsfrequenz des Leistungs-
swandlers aufgrund der Ausgänge der Drehzahl-
Erfassungeinrichtungen, wobei die Regeleinrichtung eine Einrichtung zur Auswahl derjenigen
einen Drehzhl-Erfassungseinrichtung (PG1 . . .
PG4), die bei Leerlauf-Fahrt des elektrischen Fahrzeugs die maximale Drehzahl erzeugt; eine Einrichtung zur Speicherung der jeweils ausgewählten Drehzahl-Erfassungseinrichtung; und eine
Einrichtung (F) zur Regelung der Ausgangsfrequenz des Leistungswandlers (INV) während der
angetriebenen Fahrt des elektrischen Fahrzeugs
unter Verwendung des Ausgangs der gespeicher-
ten Drehzahl-Erfassungseinrichtung als Bezugs-
größe umfaßt.

2. Regelsystem nach Anspruch 1, wobei die
Frequenzregeleinrichtung eine Einrichtung (F) zur
Erfassung der Ausgangsfrequenz des Leistungs-
swandlers (INV) durch Addition des Ausgangs
einer Schlupffrequenz-Einstelleinrichtung (Sf$_s$)
zum Ausgang der gespeicherten Drehzahl-Erfassungseinrichtung (PG1 . . . PG4) aufweist.

3. Regelsystem nach Anspruch 1, wobei die
Frequenzregeleinrichtung eine Einrichtung (MU)
zur Korrektur des Ausgangs der Drehzahl-Erfassungseinrichtung (PG1 . . . PG4) während der
angetriebenen Fahrt in Abhängigkeit von
während der Leerlauf-Fahrt erfaßten und gespeicherten Drehzahlunterschieden; sowie eine
Einrichtung (F) zur Ermittlung der Ausgangsfrequenze des Leistungswandlers (INV) durch Addition des Ausgangs einer Schlupffrequenz-Ein-
stelleinrichtung (Sf$_s$) zum Ausgang der Korrek-
tureinrichtung (MU) aufweist.

4. Regelsystem für ein elektrisches Fahrzeug
mit mehreren Rädern (W1 . . . W4) entsprechenden mehreren Induktionsmotoren (IM1 . . . IM4);
Einrichtungen (PG1 . . . PG4) zur Erfassung der
Drehzahlen der Induktionsmotoren; einem
gemeinsamen Leistungswandler (INV) zur Versorgung der Induktionsmotoren mit elektrischer
Leistung; und einer Einrichtung (SMC, F; MC) zur
Regelung der Ausgangsfrequenz des Leistungs-
swandlers aufgrund der Ausgänge der Drehzahl-
Erfassungseinrichtungen, wobei die Regeleinrichtung eine Einrichtung zur Auswahl derjenigen
einen Drehzahl-Erfassungseinrichtung (PG1 . . .
PG4), die bei Leerlauf-Fahrt des elektrischen Fahrzeugs die maximale Drehzahl erzeugt; eine Einrichtung zur Speicherung der jeweils ausgewählten Drehzahl-Erfassungseinrichtung; sowie eine
Einrichtung (F) zur Regelung der Ausgangsfrequenz des Leistungswandlers (INV) während der
nutzgebremsten Fahrt des elektrischen Fahrzeugs
unter Verwendung des Ausgangs der gespeicher-
ten Drehzahl-Erfassungseinrichtung als Bezugs-
größe umfaßt.

5. Regelsystem nach Anspruch 4, wobei die Frequenzregelungseinrichtung eine Einrichtung
(F) zur Ermittlung der Ausgangsfrequenz des Leistungswandlers (INV) durch Subtrahieren des Au-
sgangs einer Schlupffrequenz-Einstelleinrichtung
(Sf$_s$) vom Ausgang der gespeicherten Drehzahl-
Erfassungseinrichtung (PG1 . . . PG4) aufweist.

6. Regelsystem nach Anspruch 4, wobei die
Frequenz-regeleinrichtung eine Einrichtung (MU)
zur Korrektur des Ausgangs der Drehzahl-Erfassungseinrichtung (PG1 . . . PG4) während der
gebremsten Fahrt in Abhängigkeit von während
der Leerlauf-Fahrt ermittelten und gespeicherten
Drehzahl-unterschieden; sowie eine Einrichtung
(F) zur Ermittlung der Ausgangsfrequenz des Leistungswandlers (INV) durch Subtrahieren des Au-
sgangs einer Schlupffrequenz-Einstelleinrichtung
(Sf$_s$) vom Ausgang der Korrektureinrichtung (MU)
aufweist.

**Revendications**

1. Système de commande pour un véhicule
électrique, comportant une pluralité de moteurs à
induction (IM1 . . . IM4) correspondant à une
pluralité de roues (W1 . . . W4); des moyens (PG1
. . . PG4) servant à détecter les vitesses de rotation
dudit moteur à induction; un transducteur de
puissance commun (INV) servant à alimenter
lesdits moteurs à induction avec une énergie
électrique; et des moyens (SMC, F; MC) servant à
commander la fréquence de sortie dudit
transducteur de puissance sur la base des
signaux de sortie desdits moyens de détection
des vitesses de rotation, et dans lequel lesdits
moyens de commande comprennent les moyens
pour sélectionner celui des moyens (PG1 . . . PG4)
de détection des vitesses de rotation, qui produit
la vitesse maximum pendant la marche par inertie
dudit véhicule électrique; des moyens pour
mémoriser celui desdits moyens de détection des
vitesses de rotation, qui a été sélectionné, et des
moyens (F) servant à commander la fréquence de
sortie dudit transducteur de puissance (INV)
pendant la marche, avec alimentation d'énergie,
dudit véhicule électrique, en utilisant comme
référence le signal de sortie desdits moyens de
détection des vitesses de rotation, qui a été
mémorisé.

2. Système de commande selon la
revendication 1, dans lequel lesdits moyens de
commande de la fréquence comprennent des
moyens (F) pour déterminer la fréquence de
sortie dudit transducteur de puissance (IMV) par
addition du signal de sortie desdits moyens (Sf$_s$)
de réglage de fréquence de glissement au signal
de sortie desdits moyens de détection des
vitesses de rotation (PG1 . . . PG4), qui a été
memorisé.

3. Système de commande selon la
revendication 1, dans lequel lesdits moyens de
commande de la fréquence comporte des
moyens (MU) servant à corriger le signal de sortie
desdits moyens de détection des vitesses de
rotation (PG1 . . . PG4) pendant le fonctionnement
avec alimentation en énergie, en fonction des différences des vitesses de rotation détectées et mémorisées pendant la marche par inertie; et des moyens (F) pour déterminer la fréquence de sortie dudit transducteur de puissance (INV) par addition du signal de sortie desdits moyens ($Fs_s$) de réglage de la vitesse de glissement au signal de sortie desdits moyens de correction (MU).

4. Système de commande pour un véhicule électrique, comprenant une pluralité de moteurs à induction (IM1 ... IM4) correspondant à une pluralité de roues (W1 ... W4); des moyens (PG1 ... PG4) servant à détecter les vitesses de rotation desdits moteurs à induction; un transducteur de puissance commun (INV) servant à alimenter lesdits moteurs à induction avec une énergie électrique; et des moyens (SMC, F; MC) servant à commander la fréquence de sortie dudit transducteur de puissance sur la base des signaux de sortie desdits moyens de détection des vitesses de rotation, et dans lequel lesdits moyens de commande incluent des moyens servant à sélectionner celui desdits moyens de détection des vitesses de rotation (PG1 ... PG4), qui produit la vitesse minimale pendant la marche par inertie dudit véhicule électrique; des moyens pour mémoriser celui desdits moyens de détection des vitesses de rotation, qui a été sélectionné; et des moyens (F) servant à commander la fréquence de sortie dudit transducteur de puissance (INV) pendant la marche avec freinage récupérateur dudit véhicule électrique, en utilisant comme référence le signal de sortie de celui desdits moyens de détection des vitesses de rotation, qui a été mémorisé.

5. Système de commande selon la revendication 4, dans lequel lesdits moyens de commande de la fréquence comprennent des moyens (F) servant à déterminer la fréquence de sortie dudit transducteur de puissance (INV) par soustraction du signal de sortie desdits moyens ($Fs_s$) de réglage de la fréquence de glissement, du signal de sortie de celui desdits moyens de détection des vitesses de rotation (PG1 ... PG4), qui a été mémorisé.

6. Système de commande selon la revendication 4, dans lequel lesdits moyens de commande de la fréquence comprennent les moyens (MU) servant à corriger le signal de sortie desdits moyens de détection des vitesses de rotation (PG1 ... PG4) pendant la marche par inertie, en fonction de différences de vitesses de rotation détectées et mémorisées pendant la marche par inertie; et des moyens (F) servant à déterminer la fréquence de sortie dudit transducteur de puissance (INV) par soustraction du signal de sortie dudit moyen ($Fs_s$) de réglage de la fréquence de glissement, du signal de sortie dudit moyen de correction (MU).

# FIG. 1

# FIG. 2

FIG. 3

0 085 394

FIG. 4

4

## FIG. 5

## FIG. 6

## FIG. 7

START

READ $f_1 \sim f_4$

COASTING? — NO

YES

MAX. OF $f_1 \sim f_4$

DETERMINE AND MEMORIZE OF NO. OF P.G. WHICH SHOULD BE USED IN POWERING

MIN. OF $f_1 \sim f_4$

DETERMINE AND MEMORIZE OF NO. OF P.G. WHICH SHOULD BE USED IN BRAKING

POWERING / BRAKING — BRAKING

POWERING

$f_n$=FREQUENCY OF P.G. WHICH SHOULD BE USED IN POWERING

$f_0 = f_n + f_s$

$f_n$=FREQUENCY OF P.G. WHICH SHOULD BE USED IN BRAKING

$f_0 = f_n + f_s$

RETURN